# EUROPEAN PATENT SPECIFICATION

(11) **EP 1 488 759 B1**
(45) Date of publication and mention of the grant of the patent: **10.05.2017**
(21) Application number: 04394033.7
(22) Date of filing: 10.06.2004
(51) Int. Cl.: A61C 7/00

(54) **Method and system for selecting orthodontic appliances**
Verfahren und System zur Auswahl von orthodontischen Vorrichtungen
Procédé et système pour sélectionner des appareils orthodontiques

(30) Priority: 17.06.2003 US 478826 P
(43) Date of publication of application: 22.12.2004
(73) Proprietor: Align Technology, Inc., San Jose, CA 95131 (US)
(72) Inventor: Kopelman, Avi, Ramat Chen 52233 (IL); Taub, Eldad, Reut 71908 (IL)
(74) Representative: Grünecker Patent- und Rechtsanwälte PartG mbB

(56) References cited:
- US-A1- 2003 059 736
- US-B1- 6 540 512

## Description

### FIELD OF THE INVENTION

This invention relates to orthodontics. More specifically, this invention relates to a computerized method and system for selecting orthodontic appliances such as brackets and tubes.

### BACKGROUND OF THE INVENTION

It is the object of orthodontic treatment to align and reposition teeth for both functional and aesthetic purposes. This is achieved by the use of a variety of orthodontic appliances including brackets, tubes, wires (archwires), coil springs and elastics. In combination, these appliances are fixed to the teeth in such a manner that orthodontic forces and moments cause the teeth to move in the desired direction.

There are currently acceptable guidelines in orthodontics which define the optimal dental and skeletal relations representing the goals of orthodontic treatments. A summary of these guidelines can be found in Straight Wire, the Concept and Appliances, by Laurence F. Andrews, L.A. Well, Co., San Diego, California, USA, 1989*.* These guidelines are based on both functional and aesthetic considerations.

Today, there are known computerized methods for the virtual planning of orthodontic treatment, some of which utilizes, for example, the so-called "straight wire" technique, and involves the use of brackets having slots that are designed to be in a common plane once the teeth have moved to desired, final positions. Although the slots of the brackets are not aligned at the beginning of the treatment due to various malpositions of the teeth, the inherent resilience of the archwire provides a restoring force that tends to move the archwire and hence the slots of the associated brackets into alignment in a common plane. Such methods are described, for example, in US 6,739,869 and WO 03/092533 (US application number 60/377,325), and in US 6,733,289

The outcome of orthodontic treatment depends, among others, upon the accuracy of the positioning of the orthodontic bracket and upon the physical characteristics of the orthodontic bracket that is used. In the straight wire technique described above, each bracket has a certain "prescription" that represents particular characteristics of the bracket. The prescription can include numerous different aspects or features of the bracket that can yield the desired movement of the tooth.

US 5,454,717 discloses a method and system for forming custom orthodontic brackets. The brackets include a bracket base mountable on a tooth and a support extending therefrom for supporting an archwire, in a slot of the custom inclination, depth and curvature with respect to the mounting surface of the bracket base to the tooth. The brackets are formed by mounting blanks on an inclinable holder, positioning a cutter blade and inclining the holder to cut a custom slot in an archwire plane through the support on the b racket. The cutting tool and bracket holder are computer controlled and driven by signals produced from digitized data relating to the individual patient's anatomy, and to tooth finish positions and bracket and archwire geometry calculated from digitized data taken from the patient's mouth or model thereof.

US 6,089,868 discloses a computerized method of selection of orthodontic appliance such as orthodontic bands. Data representative of one or more teeth of a patient and data representative of a set of orthodontic appliances are provided. Each orthodontic appliance of the set of orthodontic appliances has an appliance parameter (e.g. band size) that varies from the other orthodontic appliances of the set. A geometrical parameter of the tooth of the patient is determined (e.g. a perimeter length of a cross-section of the tooth, an area of a cross-section of the tooth, a volume of a section of the tooth, a width of a cross-section of the tooth, etc). The geometrical parameter is compared to the data representative of the set of orthodontic appliances and one orthodontic appliance of the set is selected based on the comparison.

In US 6,733,289, a prescription for an orthodontic brace is selected from two or more prescriptions by providing data representing a number of teeth of the dental arch and by displaying images of the teeth in two or more different positions corresponding to the alternative prescriptions. Images of at least one tooth when in the first position and when in the second position are simultaneously displayed in superimposed fashion, and any difference in orientations of the displayed tooth images between the first position and the second position appears in contrast. As a consequence, the relative difference in positions can be readily observed. The invention may also be used for observing the relative effect of a single prescription when used on certain teeth in comparison to the position of the same teeth during an earlier stage of treatment. US 2003/059736 A1 discloses a trial-error method based on the selection of a proposed set of orthodontic appliances and on the effects of these orthodontic appliances on the proposed orthodontic treatment.

### SUMMARY OF THE INVENTION

The present invention provides a computerized method for selecting a preferred orthodontic appliance to be used in real-life orthodontic treatment of a patient. In the context of virtual orthodontic treatment design, the present invention is based on a novel and efficient concept for selecting orthodontic appliances such as brackets, by defining real-life, "off the shelf" available appliances that best match those required appliances as determined in the virtual treatment.

The invention thus provides a computerized method for selecting a preferred orthodontic appliance to be used in real-life orthodontic treatment of a patient that comprises:
(a) providing virtual treatment plan including characteristics of at least one required orthodontic appliance, wherein the at least one required orthodontic appliance is defined by the virtual treatment plan by specifying said characteristics;
(b) providing appliances catalogue including characteristics of available orthodontic appliances;
(c) comparing characteristics of the required orthodontic appliance with characteristics of the available orthodontic appliances; and
(d) determining at least one available orthodontic appliance that best matches the characteristics of the required orthodontic appliance.

Step (d) is typically carried out according to predetermined criteria. For example, the criteria may comprise determining one or more preferred appliances which have characteristics which exactly match the characteristics of the required appliance. Alternatively, the criteria may comprise providing one or more appliances which have the highest number of characteristics that are matched in the required appliance, exactly or to a predetermined degree. Alternatively, the criteria may comprise providing one or more appliances which have the highest summation of matching values of characteristics with respect to in the required appliance.

Many other criteria, and many permutations of criteria are also possible.

Should there be, for any required appliance, more than one preferred appliance that is considered a best match according to the predetermined criteria, it may be possible to choose one appliance between such appliances based on other, secondary criteria, including one or more of cost, manufacturer, elapsed time between placing an order and receiving the appliance from a manufacturer, and so on.

The term "*characteristics*" is used to denote features and parameters of orthodontic appliances. In the case of brackets, the term "characteristics" refers to brackets features and parameters such as torque, slot size, base-point-to-slot-point distance, in/out, bracket base inclination, bracket slot inclination, the curvature of the bracket base including the mesiodistal bracket base contour and/or the occlusogingival bracket base contour; tie wing height, tie wing direction.

The term "appliance" is taken herein to include one or more of brackets, tubes, archwires, coil springs, elastics, and so on.

Typically, in step (a), the required orthodontic appliance is chosen from a full range of possible appliances, whether available or not to the particular user, and thus represents an ideal-practical orthodontic appliance. On the other hand, the preferred orthodontic appliance in (d) is chosen from among a different group of appliances that may be, for example, available to the user, or represent a particular manufacturer, and may or may not include the aforesaid required orthodontic appliance. Accordingly, the invention allows a user to determine which appliances, among available appliances, i.e. "available" as predefined by the user, best matches the ideal appliances for any particular treatment.

The present invention also provides a method for selecting a preferred orthodontic appliance to be used in real-life orthodontic treatment of a patient which can be integrated with a method for virtual treatment. According to this aspect, a method of the present invention further includes determining discrepancies between the characteristics of the preferred orthodontic appliance and the required orthodontic appliance and based on said discrepancies, allowing updating the characteristics of the required orthodontic appliance.

According to yet another aspect, the virtual treatment plan includes a virtual three-dimensional (3D) image of the patient's dentition with the required orthodontic appliances, representing the outcome of the virtual treatment, and the method according to the present invention further comprising allowing update of the virtual treatment plan (including the 3D image) according to the characteristics of the preferred orthodontic appliance.

The present invention also provides a system for selecting preferred orthodontic appliances to be used in real-life orthodontic treatment of a patient, comprising:
a processor;
an input utility coupled to the processor for receiving data indicative of a virtual treatment plan including characteristics of required orthodontic appliances;
a memory utility coupled to the processor for storing data indicative of a plurality of available orthodontic appliances; and
an output utility coupled to the processor,
wherein the characteristics of the required orthodontic appliances and the available orthodontic appliances are compared and those available orthodontic appliances that best match the required orthodontic appliances are determined.

In another aspect, a computer readable medium is provided that embodies in a tangible manner a program executable for selecting a preferred orthodontic appliance to be used in real-life orthodontic treatment of a patient. The computer readable medium comprises:
(a) a first set of data representative of a virtual treatment plan including characteristics of at least one required orthodontic appliance;
(b) a second set of data representative of appliances catalogue including characteristics of available orthodontic appliances;
(c) means for comparing at least a portion of said first set of data corresponding to said characteristics of said at least one required orthodontic appliance with at least a portion of said second set of data corresponding to said characteristics of said available orthodontic appliances; and
(d) means for determining at least one of said available orthodontic appliances that best matches the characteristics of the required orthodontic appliance.

The invention will now be illustrated by the following embodiments with occasional reference to the annexed drawings.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
**Fig. 1** is a block diagram showing the main steps of a method according to an embodiment of the present invention;
**Figs. 2A** and **2B** show a block diagram of the virtual orthodontic treatment;
**Fig. 3** schematically shows bracket characteristics;
**Fig. 4** schematically illustrates in more detail steps 120 and 130 in Fig. 1;
**Fig. 5** is a block diagram of a system according to an embodiment of the present invention.

### DETAILED DESCRIPTION OF THE INVENTION

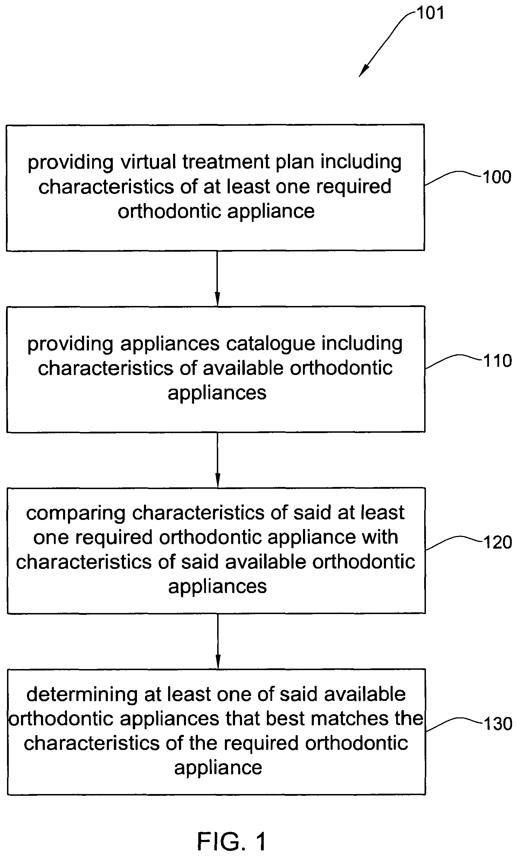

**Fig. 1** is a block diagram showing the main steps of a method **10** according to an embodiment of the present invention. Method **10** utilizes a virtual orthodontic treatment plan and is aimed at providing a user (e.g. a practitioner) with reference to real-life, physical orthodontic appliances that are available for use in real-life orthodontic treatment, in order to yield the outcome of the virtual treatment plan.

Step **100:** providing virtual treatment plan including characteristics of at least one required orthodontic appliance. The required orthodontic appliance is virtually defined in a manner that will be explained further below.

Step **110:** providing appliances catalogue including characteristics of available orthodontic appliances. The appliances catalogue is digitally provided and relates to real-life appliances which are available "off the shelf" by commercial companies such as 3M, American Orthodontics and many others.

Step **120:** comparing characteristics of the required orthodontic appliance with characteristics of the available orthodontic appliances.

Step **130:** determining at least one of the available orthodontic appliances that best matches the characteristics of the required orthodontic appliance.

The main steps of method **10** will now be explained in greater details:
Step **100** may include a method for virtual orthodontic treatment, as described in US 6,739,869, for example. This method may be carried out as follows:
   providing a first virtual three-dimensional (3D) image ("first image") indicative of a three-dimensional (3D) model of all teeth from teeth of one or both of the upper and lower jaws of a patient. The 3D model being digitally manipulable so as to allow viewing it from a desired direction.
   selecting a virtual set of orthodontic components, comprising brackets for attachment to teeth of the image, and one or two arch wires, one for each jaw of the image. Each bracket has a slot for engaging an arch wire.
   - associating the brackets with the teeth of the first image so as to obtain a "second image" of the virtual 3D model with the brackets associated with the teeth of the model, one bracket on each teeth in the model;
   applying a set of rules, including a rule that requires each slot to engage the wire, computing the manner of movement of each tooth with the bracket associated therewith, so as to obtain a "third image" comprising the teeth model following the virtual treatment.

The association of the brackets with the teeth as well as the application of the set of rules for computing the treatment outcome, may be repeated a plurality of times until yielding a desired result of the virtual treatment. A user (e.g. the practitioner) c an be provided with a user interface a nd is a llowed to manually select the virtual set of orthodontic components and to associate the brackets with the teeth for example in different locations.

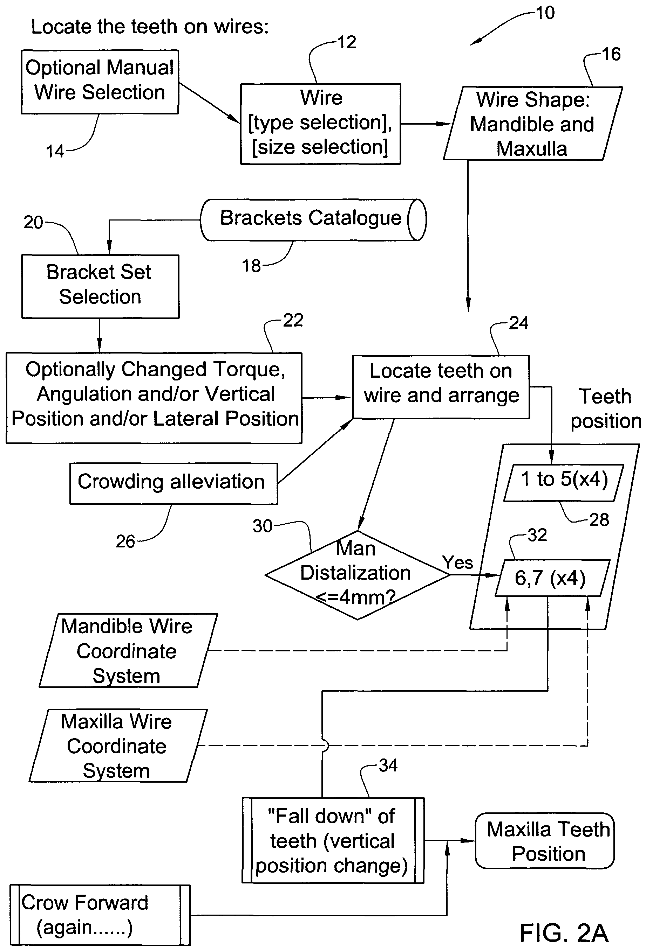

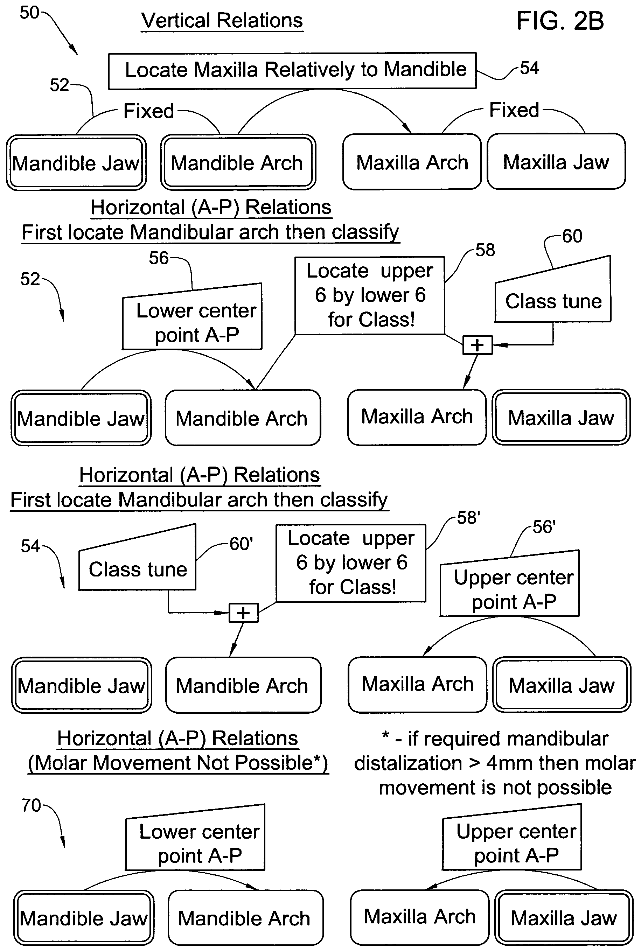

Figs. 2A and 2B show, by way of a block diagram, a scheme of orthodontic treatment which can be used to generate the virtual representation of the teeth with the bracket.

Reference is now made to Fig. 2A which shows a flow diagram **101** showing the manner in which teeth are positioned and fixed onto arch wires. According to diagram **101,** the process begins with selecting the type of wire to be used in the virtual treatment. The selection of the virtual wire **12** may either be achieved automatically by the system or selected by the user **14.** The automatic selection is based in principal on minimal teeth movement in the jaw. A wire is selected for both the mandible and the maxilla **16.** Typically, the wires for the mandible and maxilla are selected based on the profile, size etc., of the wire.

In addition, virtual brackets are selected from brackets catalog **18.** The brackets catalog **18** may include the full range of virtual appliances that correspond to real-life appliances, regardless of whether the real-life appliances are available or not to the particular user, and may also optionally include a range of virtual appliances which have no real-life counterparts. The brackets selected **20** may be further manipulated by changing their torque, angulations and/or vertical positioning on to the wire **22.**

The outcome of the above procedure is an arch wire set with virtual brackets which are fixed with the respective virtual teeth, the teeth being optimally arranged according to orthodontic criteria **28.** At times, movement of the first virtual molar teeth by the system of the invention may result in a distilization of the mandibular molar teeth (mandible distalization **30)** to a greater extent than that allowed in real life treatment according to real life treatment considerations. Accordingly, after the translocation of virtual teeth as described above, the system verifies whether the mandibular distilization performed would be allowed in real life considerations and if in the negative, the result displayed on the display screen will show the user that the procedure performed would not be feasible in real life orthodontic treatment. The user will then know that the orthodontic treatment plan he selected should be changed, e.g. by selecting a different wire, different brackets, performing other, if any, manipulations on the teeth, etc.

The resulting arrangement of the virtual teeth may further be processed by applying a vertical repositioning of the teeth **34,** and if necessary, by further crowding the teeth as already performed (step (ii) above). The result obtained for one arch, i.e. the maxillary arch or the mandibular arch, is then used for the determination of the inter arch relationship.

Reference is now made to Fig. 2B which shows the steps for determining the inter arch relationship. In particular, Fig. 2B shows flow diagrams **50, 52, 54** and **70** describing the steps for obtaining vertical and horizontal alignments of the mandible and maxilla.

Flow diagram **50** describes vertical alignment of the mandible and the maxilla. Accordingly, the mandibular arch is first aligned with the mandibular jaw by their central point (an average distance between the central incisors) to fall onto the mid palatal plane **52.** The maxillary arch fixed onto the maxillary jaw is then vertically aligned onto the mandibular jaw in the manner as described in US 6,334,853.

Flow diagrams **52** and **54** show the horizontal alignment between the maxilla and mandible. Flow diagram **52** shows alignment of the maxilla according to fixed mandible parameters, while flow diagram **54** shows the alignment of the mandible according to the maxilla.

The following description refers to alignment of the maxilla according to the fixed mandibular. However, it should be understood that the same steps apply in flow diagram **54,** for alignment of the mandible according to the fixed maxilla jaw (*mutatis mutandis*).

For determining the inter arch relationship, first the parameters of the mandibular jaw are provided, with which the mandibular arch is aligned by determining their center antheroposterior point (lower center point A-P **56).** Then, occlusion of the mandibular first molar with the maxillary first molar is dictated by the features of Class (I) type of occlusion **58.** If necessary, i.e. when the outcome obtained and displayed on the display screen is not the desired outcome or when the user decides it is required to change the Class type, he may change the class by which the mandibular first molar and the maxillary first molar interlock, until reaching the desired outcome **60.**

At times, the horizontal alignment performed will result in a mandibular distilization which is greater than that acceptable in real life orthodontic treatment. As a result, the procedure according to the invention is carried out according to flow diagram **70.** This flow diagram shows that when desired or required, while each arch is positioned onto their respective jaw by defining their center antheroposterior point, the steps of interlocking the molar teeth according to standard orthodontic guidelines is not performed.

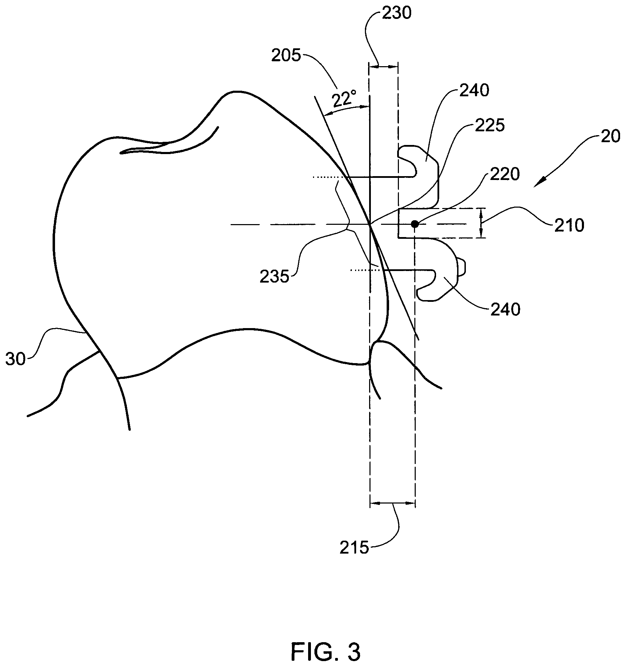

Thus, the virtual treatment plan includes the selection of required appliances and the determination of their proper placement on the teeth surface. Each required bracket or other appliance thus represents an ideal-practical or an ideal orthodontic appliance. By "ideal" appliance is meant an appliance, whether virtual or real-life, 01539733\4-03 that provides the optimal characteristics for the treatment sought, whereas by "ideal-practical" appliance, is meant a practical real-life appliance that provides the optimal characteristics for the treatment sought, whether available or not, and regardless of a ny other consideration. Each of the required b rackets which w ere selected, has a certain "prescription" that represents particular characteristics of the bracket. The prescription can include numerous different aspects or features of the bracket, which dictates its placement on the tooth surface and its influence on the tooth. **Fig. 3** schematically shows bracket **20** onto tooth **30,** and such bracket characteristics as torque angle **205** (which is the angle of rotation of the bracket's slot with respect to the bracket's base), the size of the archwire slot **210,** the base-point-to-slot-point distance **215** (i.e. the distance between base point **225** and slot point **220,** also known as "stem"), or the in/out characteristic **230,** the curvature of the bracket base **235,** i.e., including mesiodistal bracket base contour and/or occlusogingival bracket base contour, and the symmetry or asymmetry between the bracket's tie wings **240.** Other characteristics can also be used.

According to one embodiment of the present invention, the required appliances are defined by the virtual treatment plan by specifying only partial characteristics, for example, by their torque and in/out characteristics. According to another embodiment, the treatment plan determines the required brackets by other or additional characteristics.

The characteristics of the required appliances are compared to the characteristics of real-life or available appliances in step **120** by utilizing a digital appliance catalogue provided in step **110.** In the digital catalogue the brackets can be categorized by their characteristics and identified for example by the manufacturer's name and code. The digital catalogue represents real-life appliances, which are available to the user. The catalogue can relate, for example, to all brackets which are commercially available, to brackets available by a specific manufacturer or to those brackets which are currently available to the practitioner at his clinic. Accordingly, the brackets catalogue may be interactively updated by the user as required or desired. Optionally, the brackets catalogue provided in step **110** may be comprised in catalogue **18** (Fig. 2A), which may be considered as a global catalogue, and the user may choose from catalogue **18** the particular items which should be considered for step **120.**

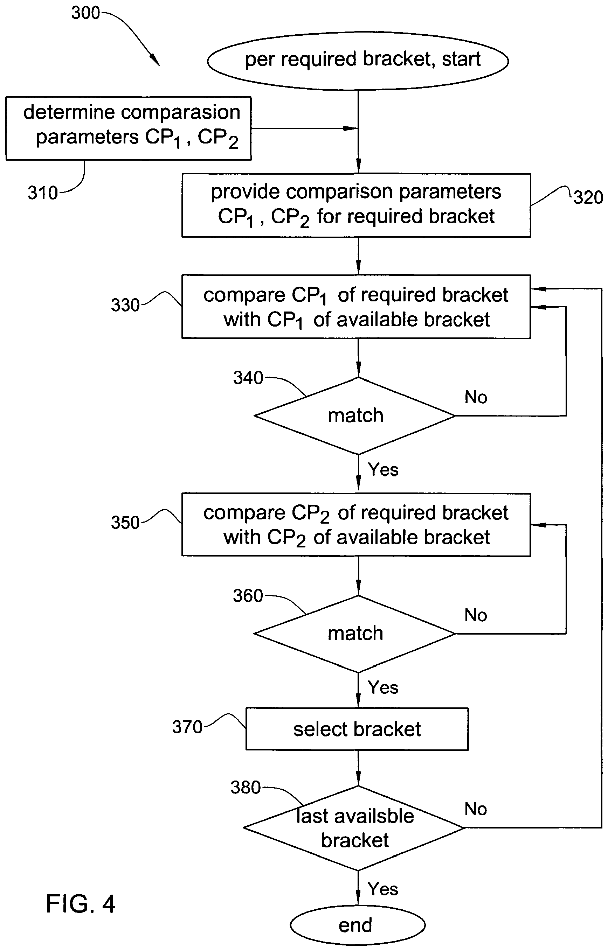

**Fig. 4** schematically illustrates method **300,** which demonstrates one possible way to carry out steps 120 and 130 in Fig. 1, for each required bracket.

Step **310:** Determine comparison parameters. In this example, the comparison is based on only two parameters, for example, in/out (CP₁) and torque (CP₂). According to one embodiment of the invention, step **310** is a preliminary step. Furthermore, the user can be allowed to specify his preferred comparison parameters.

Step **320:** provide CP₁ and CP₂ for the required bracket. According to one embodiment of the present invention, this data is provided in step **110** of Fig. 1. According to another embodiment of the invention, this data may needs further processing. However, in the specific and non limiting example of Fig. 4, both characteristics, namely, in/out and torque parameters are determined by the virtual treatment plan.

Step **330:** compare CP₁ of the required b racket with CP₁ of the available bracket. In this example, CP₁ relates to the in/out parameter, which is typically 2.1 mm or 2.5 mm. If the in/out parameter of the required bracket is defined to be 2.1 mm, the algorithm will continue for those available brackets having the same CP₁ parameter (i.e. in/out parameter that equals 2.1 mm). This is checked in step **340,** which filters out all the brackets which do not meet this criterion. Typically, a number of brackets may be found that meet the criterion of having the in/out parameter equal to 2.1 mm, and the algorithm continues with this set of brackets to the next step.

Step **350:** compare CP₂ of the required bracket with CP₂ of the available bracket. In this example, CP₂ relates to the torque parameter, for example, 22°. The algorithm will continue for those available brackets having the same CP₂ parameter (i.e. torque parameter that equals 22°). This is checked in step **360.** The selected available bracket is assigned with the prescription of the corresponding required bracket. This is done in Step **370** (Step 130 of Fig. 1).Again, it may be that there are a number of brackets that also conform to this value of parameter CP₂, and the user can choose which one to continue with. Alternatively, and in practice, more parameters are checked by the algorithm, and the final remaining number of brackets that fit all the criteria with respect to the required bracket is typically small or unity. Optionally, other criteria may now be used to choose between the final set of brackets, for example cost, aesthetic look, manufacturer, and so on. Alternatively, the algorithm may allow the user may choose interactively at this stage.

It is possible that at one or more of the comparison stages, no brackets are found with exactly matching criteria. In such cases, it is possible to choose one or more appliances having a value for the particular criterion within a predetermined threshold value of the required value, say ±5%. If still no brackets are found, the threshold may be increased, and this process may be repeated in as many stages, and in whatever increments for the threshold value as required or desired. For example, if no brackets can be found having the same value for CP₁ parameter as the required bracket, the user may be advised of this, and/or, one or more brackets can be chosen instead, automatically or by the user, having the value of characteristic CP₁ within a predetermined threshold of the value required, i.e., of the value of CP₁ of the required bracket. The threshold may be, for example, ±0.15mm. This group of brackets can proceed to the next comparison stage.

Optionally, rather than filtering out all brackets that do not conform to a particular characteristic at any one comparison stage, it is possible to instead perform each comparison step with all the brackets of the catalogue of step 110. Thus, at the end of all the comparison steps, each bracket in the catalogue may be checked to see how well it performs vis-à-vis the required bracket. For example, the bracket with the largest number of matched characteristics may be the best overall match with respect to the required bracket. Alternatively, the matching value for each characteristic may be found by determining how closely each characteristic matches the value of that of the required bracket arithmetically. A perfect match has a matching value of 1.0, a 50% numerical match in the characteristic has a 0.5 matching value and so on, for example. The matching values for each characteristic may be added, simply or according to some other criteria, for example a weighting criteria that assigns a coefficient to each matching value according to the overall relative importance of each characteristic, and the bracket with the highest summation of matching values may be selected as most closely matching the required bracket.

At times, though, there may more than one bracket of the catalogue having the same number of matched characteristics. If these are the same characteristics, then other criteria m ay b e u sed, manually or automatically, to choose the "b est" match within this group, such as for example cost, preferences in manufacturer, and so on. Alternatively, the non-matched characteristics of the group may be further examined, and the bracket having such characteristics closest to the value of the corresponding characteristic of the required bracket is chosen.

It may also happen that a number of brackets are found having the same number of matched characteristics with respect to the required bracket, though the matched characteristics may not be identical from bracket to bracket. Selecting the preferred bracket from such a group may be performed in a number of different ways. For example, the characteristics may be assigned an "importance value", in terms of how critical this particular characteristic is towards the overall definition and function of the bracket with respect to the treatment being considered. In this manner, the characteristics may be "weighted" accordingly, and the bracket having the greatest number of matched characteristics, weighted accordingly, is selected. Optionally, even partially matched characteristics may be included in such a determination, since a 95% match in one characteristic may be more important than a 100% match in another characteristic, for example.

Further optionally, the method may include a special filtering out step for each characteristic being compared. For example, if for a given bracket any particular characteristic thereof has a value below a particular threshold value of the required characteristic of the required bracket, the available bracket is discarded, regardless of how closely this bracket matches the other characteristics. For example, if a given bracket has a negative torque characteristic, and a positive torque characteristic is being sought, then the given bracket is totally unsuitable, even if its other characteristics are identical to those of the required bracket.

Method **300** is carried out for each required bracket in turn, and at the end of Step **130** of Fig. 1, the practitioner is provided with references to a full set of brackets, including prescription details. The practitioner can be provided with information relating to the manufacturer of each bracket, its availability in his clinic, and additional information as required. It should be noted that the comparison parameters that can be used accordion to the present invention are not limited to in/out or torque parameters, and other bracket characteristics can be used for conducting the comparison between the required brackets and the available brackets. Such characteristics may include and are not limited to slot size, base-point-to-slot-point distance, bracket base inclination, bracket slot inclination, mesiodistal b racket b ase contour, occlusogingival b racket b ase contour; tie wing height, tie wing direction. Furthermore, each of the available brackets may be assigned with characteristics which will not be used for comparison.

Not shown in Fig. 4 is a step in which the user can be allowed to specify a parameter that will limit the selection of the available bracket. For example, the user can be allowed to limit the selection to brackets available from a specific manufacturer.

According to one embodiment of the invention, the discrepancies between the characteristics of the selected/preferred available bracket and the corresponding required b racket are determined. If this discrepancy exceeds a certain value, the user can be alerted. It is also possible to integrate the present invention with a method of virtual treatment and to update the virtual treatment plan according to the characteristics of the selected available brackets.

The present invention can be also integrated with a method for displaying the three dimensional image of the patient's dentition, such as those disclosed in US 6,664,986, US 6,739,869, WO 00/25677 (US application number 09/830,264), US publication number 2003-014350 (US application number 10/059,728) and US 6,334,772. Typically, such methods allow the imaging of the patient's dentition before treatment, and also the outcome of a virtual treatment plan, and perhaps the proper placement of the brackets on the teeth's surfaces. The present invention can be integrated with such methods, in order to provide the practitioner with an image of the outcome of the treatment plan, including the selected available brackets.

According to the present invention, it is possible to select, for a specific required bracket, one or more available brackets, according to predefined comparison parameters, and to further make a selection among the selected brackets based on additional information. For example, for a specific bracket, the method of the present invention can select two available brackets having the same in/out and torque parameters, but differing in the so-called convenience features, e.g., symmetrical or asymmetrical tie wings. In such a case, the practitioner will be able to example 3-D images of the patient's dentition, and use the visualized information and further select between the selected available brackets.

Optionally, the method may further comprise the step of displaying a list of the preferred appliances, e.g. brackets, chosen with the method for a particular treatment. The list includes identifiers, for example catalogue references, for each of the preferred appliances. Further optionally, the display may also include a list of the original required appliances, to enable the user to easily review the differences between the two sets of appliances, and thus the list may include, for each appliance, a listing of the characteristics of the referred appliance and a list of the characteristics of the required appliance. Such a display may be via a screen and/or via printed matter, such as a printed table on paper, for example.

The list may be sent to the provider of the appliances, and thus considerably facilitate the ordering thereof by the user. The method may thus optionally further comprise the step of dividing the list of preferred appliances, according to manufacturer, into several lists and thus further facilitate the ordering process. The list or lists may be sent in any form including fax, mail, or email or any other electronic form, for example. The list may be sent to the provider of the appliances directly by the user, who on receipt of the appliances may mount the same on the teeth of the patient. Alternatively the list or lists may be sent to a dental laboratory, which then sends the same to the manufacturer(s), or uses the appliances of the list that it has in stock. On receipt of the brackets, the dental laboratory may then mount the brackets onto a tray for indirectly bonding the appliances to the teeth by the user, for example.

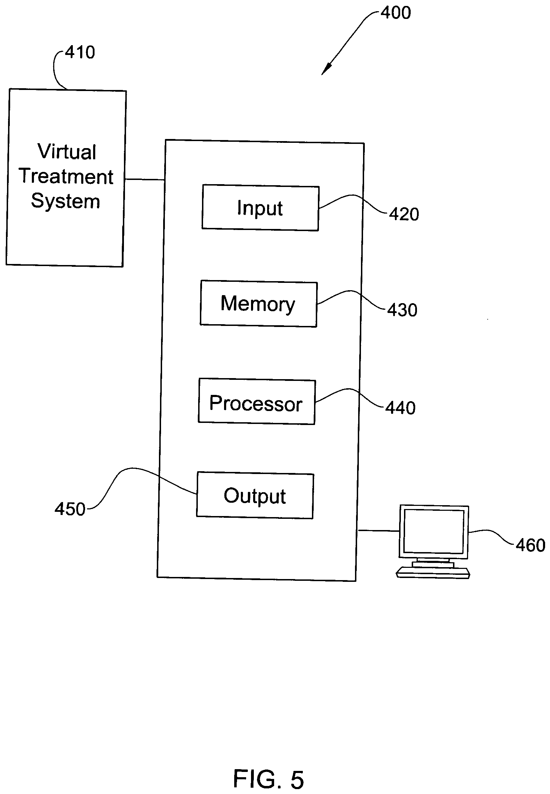

**Fig. 5** is a block diagram of a system **400** according to an embodiment of the present invention. System **400** presents a software/hardware utility connectable to a virtual treatment system **410.** System **400** comprises such main elements as follows:
an input utility **420** for receiving data indicative of a virtual treatment plan including characteristics of required orthodontic appliances (e.g. brackets);
a memory utility **430** for storing data indicative of a plurality of available orthodontic appliances (e.g. brackets);
a processor utility **440** for comparing characteristics of the required and available brackets and for determining those available brackets that best matches the required brackets, particularly usi8ng any algorithm according to the present method; and
output utility **450.**

System **400** can be connected to a display **460** or a printer (not shown) for visually presenting the selected available brackets. System **400** can be also connectable to an additional utility for conveying digital instruction for the production of the transfer trays.

In another aspect of the present invention, a computer readable medium is provided that embodies in a tangible manner a program executable for selecting a preferred orthodontic appliance to be used in real-life orthodontic treatment of a patient. The computer readable medium comprises:
(a) a first set of data representative of a virtual treatment plan including characteristics of at least one required orthodontic appliance;
(b) a second set of data representative of appliances catalogue including characteristics of available orthodontic appliances;
(c) means for comparing at least a portion of said first set of data corresponding to said characteristics of said at least one required orthodontic appliance with at least a portion of said second set of data corresponding to said characteristics of said available orthodontic appliances; and
(d) means for determining at least one of said available orthodontic appliances that best matches the characteristics of the required orthodontic appliance.

The medium may comprise, for example, optical discs, magnetic discs, magnetic tapes, and so on.

Finally, it should be noted that the word "comprising" as used throughout the appended claims is to be interpreted to mean "including but not limited to".

## Claims

1. A computerized method for selecting a preferred orthodontic appliance to be used in real-life orthodontic treatment of a patient, comprising:
(a) providing (100) a virtual treatment plan including characteristics of at least one required orthodontic appliance, wherein the at least one required orthodontic appliance is defined by the virtual treatment plan by specifying said characteristics;
(b) providing (100) a digital appliances catalogue including characteristics of available orthodontic appliances;
(c) comparing (120) characteristics of said at least one required orthodontic appliance with characteristics of said available orthodontic appliances; and
(d) determining (130) at least one of said available orthodontic appliances that best matches the characteristics of the required orthodontic appliance.

2. The method according to claim 1, wherein said virtual treatment plan includes a virtual three-dimensional (3D) image of the patient's dentition with said at least one required orthodontic appliance, said image representing the outcome of the virtual treatment; the method further comprising allowing update of said virtual treatment plan including said image according to the characteristics of said preferred orthodontic appliance.

3. The method according to claim 1, further including determining discrepancies between the characteristics of said preferred orthodontic appliance and said required orthodontic appliance and based on said discrepancies, allowing updating the characteristics of said required orthodontic appliance.

4. The method according to claim 1, wherein said characteristics of at least one required orthodontic appliance includes at least one value from a group consisting of: torque, slot size, base-point-to-slot-point distance, in/out, bracket base inclination, bracket slot inclination, mesiodistal bracket base contour, occlusogingival bracket base contour; tie wing height, tie wing direction.

5. Method according to claim 1, wherein an identification of said preferred orthodontic appliance is sent to one of a supplier or a dental laboratory.

6. Method according to claim 5, wherein said identification comprise a catalogue reference.

7. Method according to claim 5, wherein said identification is sent in electronic form.

8. A computer readable medium embodying a program executable for selecting a preferred orthodontic appliance to be used in real-life orthodontic treatment of a patient, comprising:
(a) a first set of data representative of a virtual treatment plan including characteristics of at least one required orthodontic appliance;
(b) a second set of data representative of appliances catalogue including characteristics of available orthodontic appliances;
(c) means for comparing at least a portion of said first set of data corresponding to said characteristics of said at least one required orthodontic appliance with at least a portion of said second set of data corresponding to said characteristics of said available orthodontic appliances; and
(d) means for determining at least one of said available orthodontic appliances that best matches the characteristics of the required orthodontic appliance.

9. A computer readable medium according to claim 8, wherein said medium comprises any one of an optical disc, magnetic disc, magnetic tape.

10. A system (400) for selecting a preferred orthodontic appliances to be used in real-life orthodontic treatment of a patient, comprising:
a processor (440);
an input utility (420) coupled to the processor for receiving data indicative of a virtual treatment plan including characteristics of required orthodontic appliances;
a memory utility (430) coupled to the processor for storing data indicative of a plurality of available orthodontic appliances; and
an output utility (450) coupled to the processor,
wherein the characteristics of the required orthodontic appliances and the available orthodontic appliances are compared and those available orthodontic appliances that best match the required orthodontic appliances are determined.

## Patentansprüche

1. Computergestütztes Verfahren für das Auswählen einer bevorzugten orthodontischen Vorrichtung, die bei einer realen orthodontischen Behandlung eines Patienten verwendet werden soll, umfassend:
(a) Bereitstellen (100) eines virtuellen Behandlungsplans, der Eigenschaften wenigstens einer erforderlichen orthodontischen Vorrichtung umfasst, wobei die wenigstens eine erforderliche orthodontische Vorrichtung durch den virtuellen Behandlungsplan durch Festlegen der Eigenschaften definiert wird;
(b) Bereitstellen (110) eines Sortimentes digitaler Vorrichtungen, die Eigenschaften verfügbarer orthodontischer Vorrichtungen umfassen;
(c) Vergleichen (120) von Eigenschaften der wenigstens einen erforderlichen orthodontischen Vorrichtung mit Eigenschaften der verfügbaren orthodontischen Vorrichtungen; und
(d) Bestimmen (130) wenigstens einer der verfügbaren orthodontischen Vorrichtungen, die am besten mit den Eigenschaften der erforderlichen orthodontischen Vorrichtung übereinstimmt.

2. Verfahren nach Anspruch 1, bei dem der virtuelle Behandlungsplan ein virtuelles dreidimensionales (3D) Bild der Zahnanordnung des Patienten mit der wenigstens einen erforderlichen orthodontischen Vorrichtung umfasst, wobei das Bild das Ergebnis der virtuellen Behandlung darstellt; wobei das Verfahren weiterhin das Zulassen einer Aktualisierung des virtuellen Behandlungsplans umfasst, der das Bild gemäß den Eigenschaften der bevorzugten orthodontischen Vorrichtung umfasst.

3. Verfahren nach Anspruch 1, weiterhin umfassend das Bestimmen von Diskrepanzen zwischen den Eigenschaften der bevorzugten orthodontischen Vorrichtung und der erforderlichen orthodontischen Vorrichtung und auf der Basis dieser Diskrepanzen Zulassen einer Aktualisierung der Eigenschaften der erforderlichen orthodontischen Vorrichtung.

4. Verfahren nach Anspruch 1, bei dem die Eigenschaften wenigstens einer erforderlichen orthodontischen Vorrichtung wenigstens einen Wert umfassen, der aus der Gruppe gewählt ist, die besteht aus: Drehung, Slotgröße, Abstand von Basispunkt-zu-Slotpunkt, einwärts/auswärts, Bracket-Basisneigung, Bracket-Slotneigung, mesiodistaler Bracket-Basisverlauf, occlusiogingivaler Bracket-Basisverlauf, Befestigungsflügelhöhe, Befestigungsflügelrichtung.

5. Verfahren nach Anspruch 1, bei dem eine Kennung der bevorzugten orthodontischen Vorrichtung zu einem Zulieferer oder einem Dentallabor gesendet wird.

6. Verfahren nach Anspruch 5, bei dem die Kennung eine Sortimentsbezeichnung umfasst.

7. Verfahren nach Anspruch 5, bei dem die Kennung in elektronischer Form gesendet wird.

8. Computerlesbares Medium, das ein Programm umfasst, das ausgeführt werden kann, um eine bevorzugte orthodontische Vorrichtung auszuwählen, die bei einer realen orthodontischen Behandlung eines Patienten verwendet werden soll, umfassend:
(a) einen ersten Satz von Daten, die für einen virtuellen Behandlungsplan repräsentativ sind, der Eigenschaften wenigstens einer erforderlichen orthodontischen Vorrichtung umfasst;
(b) einen zweiten Satz von Daten, die für ein Vorrichtungssortiment kennzeichnend sind, das Eigenschaften verfügbarer orthodontischer Vorrichtungen umfasst;
(c) Einrichtungen für den Vergleich wenigstens eines Teils des ersten Satzes von Daten entsprechend den Eigenschaften der wenigstens einen erforderlichen orthodontischen Vorrichtung mit wenigstens einem Teil des zweiten Satzes von Daten entsprechend den Eigenschaften der verfügbaren orthodontischen Vorrichtungen; und
(d) eine Einrichtung zum Bestimmen wenigstens einer der verfügbaren orthodontischen Vorrichtungen, die am besten zu den Eigenschaften der erforderlichen orthodontischen Vorrichtung passt.

9. Computerlesbares Medium nach Anspruch 8, wobei das Medium eine optische Platte, eine Magnetplatte oder ein Magnetband umfasst.

10. System (400) für die Auswahl einer bevorzugten orthodontischen Vorrichtung, die bei einer realen orthodontischen Behandlung eines Patienten verwendet werden soll, umfassend:
einen Prozessor (440);
ein Eingabedienstprogramm (420), das mit dem Prozessor gekoppelt ist, um Daten zu empfangen, die für einen virtuellen Behandlungsplan kennzeichnend sind, der Eigenschaften der erforderlichen orthodontischen Vorrichtungen umfasst;
ein Speicherdienstprogramm (420), das mit dem Prozessor gekoppelt ist, um Daten zu empfangen, die für einen virtuellen Behandlungsplan kennzeichnend sind, der Eigenschaften der erforderlichen orthodontischen Vorrichtungen umfasst;
ein Speicherdienstprogramm (430), das mit dem Prozessor gekoppelt ist, um Daten zu speichern, die für eine Vielzahl von verfügbaren orthodontischen Vorrichtungen kennzeichnend sind; und
ein Ausgabedienstprogramm (450), das mit dem Prozessor gekoppelt ist,
wobei die Eigenschaften der erforderlichen orthodontischen Vorrichtungen und der verfügbaren orthodontischen Vorrichtungen verglichen werden und jene verfügbaren orthodontischen Vorrichtungen bestimmt werden, die am besten mit den erforderlichen orthodontischen Vorrichtungen übereinstimmen.

## Revendications

1. Procédé informatisé de sélection d'un appareil orthodontique préféré à utiliser dans un traitement orthodontique en situation réelle chez un patient, comprenant :
(a) la préparation (100) d'un plan de traitement virtuel incluant les caractéristiques d'au moins un appareil orthodontique requis, dans lequel le au moins un appareil orthodontique requis est défini par le plan de traitement virtuel en spécifiant lesdites caractéristiques ;
(b) la préparation (100) d'un catalogue numérique d'appareils incluant les caractéristiques des appareils orthodontiques disponibles ;
(c) la comparaison (120) des caractéristiques dudit au moins un appareil orthodontique requis aux caractéristiques desdits appareils orthodontiques ; et
(d) la détermination (130) d'au moins l'un desdits appareils orthodontiques disponibles qui correspond le mieux aux caractéristiques de l'appareil orthodontique requis.

2. Procédé selon la revendication 1, dans lequel ledit plan de traitement virtuel inclut une image virtuelle en trois dimensions (3D) de la dentition du patient avec ledit au moins un appareil orthodontique requis, ladite image représentant le résultat du traitement virtuel ; le procédé comprenant en outre le fait de permettre la mise à jour dudit plan de traitement virtuel incluant ladite image selon les caractéristiques dudit appareil orthodontique préféré.

3. Procédé selon la revendication 1, comprenant en outre la détermination des écarts entre les caractéristiques dudit appareil orthodontique préféré et dudit appareil orthodontique requis et sur la base desdits écarts, le fait de permettre la mise à jour des caractéristiques dudit appareil orthodontique requis.

4. Procédé selon la revendication 1, dans lequel lesdites caractéristiques d'au moins un appareil orthodontique requis incluent au moins une valeur parmi un groupe constitué : du torque, de la taille de fente, de la distance point de base à point de fente, de l'intérieur/extérieur, de l'inclinaison de la base du boîtier orthodontique, de l'inclinaison de la fente du boîtier orthodontique, du contour de base mésiodistal du boîtier orthodontique, du contour de base occlusogingival du boîtier orthodontique ; de la hauteur des ailettes, du sens des ailettes.

5. Procédé selon la revendication 1, dans lequel une identification dudit appareil orthodontique préféré est envoyée à l'un parmi un fournisseur ou un laboratoire dentaire.

6. Procédé selon la revendication 5, dans lequel ladite identification comprend une référence de catalogue.

7. Procédé selon la revendication 5, dans lequel ladite identification est envoyée sous forme électronique.

8. Support pouvant être lu par ordinateur concrétisant un programme pouvant être exécuté pour la sélection d'un appareil orthodontique préféré à utiliser dans un traitement orthodontique en situation réelle d'un patient, comprenant :
(a) un premier ensemble de données représentatives d'un plan de traitement virtuel incluant les caractéristiques d'au moins un appareil orthodontique requis ;
(b) un second ensemble de données représentatives du catalogue d'appareils incluant les caractéristiques des appareils orthodontiques disponibles ;
(c) un moyen de comparaison d'au moins une partie dudit premier ensemble de données correspondant auxdites caractéristiques dudit au moins un appareil orthodontique requis à au moins une partie dudit second ensemble de données correspondant auxdites caractéristiques desdits appareils orthodontiques disponibles ; et
(d) un moyen de détermination d'au moins l'un desdits appareils orthodontiques disponibles qui correspond le mieux aux caractéristiques dudit appareil orthodontique requis.

9. Support pouvant être lu par ordinateur selon la revendication 8, dans lequel ledit support comprend n'importe lequel d'un disque optique, d'un disque magnétique, d'une bande magnétique.

10. Système (400) de sélection d'un appareil orthodontique préféré à utiliser dans un traitement orthodontique en situation réelle d'un patient, comprenant :
un processeur (440) ;
un utilitaire de saisie (420) couplé au processeur pour recevoir des données indicatrices d'un plan de traitement virtuel incluant les caractéristiques des appareils orthodontiques requis ;
un utilitaire mémoire (430) couplé au processeur pour le stockage de données indicatrices d'une pluralité d'appareils orthodontiques ; et
un utilitaire de sortie (450) couplé au processeur,
dans lequel les caractéristiques des appareils orthodontiques requis et des appareils orthodontiques disponibles sont comparées et les appareils orthodontiques disponibles qui correspondent le mieux aux appareils orthodontiques requis sont déterminés.
